## Europäisches Patentamt
## European Patent Office
## Office européen des brevets

(19)

(11) Numéro de publication: **0 278 806**
**B1**

(12) **FASCICULE DE BREVET EUROPEEN**

(45) Date de publication du fascicule du brevet:
07.11.90

(51) Int. Cl.⁵: **G01P 1/02**

(21) Numéro de dépôt: **88400077.9**

(22) Date de dépôt: **15.01.88**

(54) Capteur électromagnétique à reluctance variable.

(30) Priorité: **20.01.87 FR 8700555**

(43) Date de publication de la demande:
**17.08.88 Bulletin 88/33**

(45) Mention de la délivrance du brevet:
**07.11.90 Bulletin 90/45**

(84) Etats contractants désignés:
**DE GB IT SE**

(56) Documents cités:
**FR-A- 2 263 519**
**FR-A- 2 576 245**
**US-A- 3 838 372**

(73) Titulaire: **Siemens Aktiengesellschaft,
Wittelsbacherplatz 2, D-8000 München 2(DE)**

(72) Inventeur: **Anel, Christian, 40, rue Jean de Pin,
F-31300 Toulouse(FR)**
Inventeur: **Echasseriau, Gilbert, Appartement 54 30, rue
de Digue, F-31300 Toulouse(FR)**
Inventeur: **Oliveau, Patrice, 20, rue Erik Satie
Appartement 582, F-31300 Toulouse(FR)**

ACTORUM AG

## Description

La présente invention est relative à un capteur électromagnétique définissant un circuit magnétique dont la reluctance varie en fonction d'une grandeur à mesurer, telle que la vitesse ou la proximité d'un mobile, par exemple.

Plus particulièrement l'invention concerne un tel capteur destiné à mesurer la vitesse de rotation d'un arbre tournant ou d'une roue de véhicule.

Dans une telle application, le capteur est associé à un disque coaxial à une roue, par exemple, et tournant avec celle-ci, à la même vitesse angulaire. Le disque présente à sa périphérie des irrégularités de géométrie, telles que des dents. Le capteur comprend ordinairement un corps généralement cylindrique percé d'un trou axial dans lequel sont logés un aimant permanent et une pièce polaire contigus. Un bobinage électrique est enroulé sur l'extérieur du corps concentriquemeent à la pièce polaire. Le corps est monté par rapport au disque de manière à définir, entre une extrémité de la pièce polaire et la périphérie du disque, un entrefer de largeur variable en fonction de la position des dents du disque par rapport à la pièce polaire, quand le disque et la roue tournent. Cet entrefer fait partie d'un circuit magnétique dont la reluctance varie alors avec une fréquence égale à celle du passage des dents du disque devant la pièce polaire du capteur. Il en est de même du signal de tension que l'on peut prélever aux bornes du bobinage du capteur, signal qui, après mise en forme, est exploité pour mesurer la vitesse de la roue associée.

Comme l'indique le préambule de FR-A 2 263 519 déposé le 4 février 1975, on connait un capteur électromagnétique à reluctance qui comprend un carter de protection cylindrique dans lequel sont insérés les divers organes nécessaires, à savoir le bobinage électrique, l'aimant permanent, la pièce polaire, les cosses de raccordement du bobinage à un câble extérieur etc., une résine d'enrobage étant injectée dans le carter pour assurer l'isolation électrique des organes et la bonne tenue mécanique du capteur.

Lorsque la résine ainsi injectée enrobe le bobinage électrique, ce qui est en principe favorable à la bonne isolation de ce bobinage, on observe cependant des pannes du capteur par rupture du fil du bobinage. En effet, quand un tel capteur est soumis à des variations de température de grande amplitude, ce qui est le cas dans une automobile où ces variations peuvent atteindre 200°C ou plus, le fil du bobinage est soumis à de fortes contraintes du fait que son coefficient de dilation thermique est différent de celui de la résine d'enrobage. Ces contraintes provoquent à terme une rupture du fil du bobinage, rupture qui met en panne non seulement le capteur mais aussi les dispositifs exploitant les signaux fournis par ce capteur, tels que gouverneurs électroniques de boîtes de vitesse automatiques, dispositifs d'antiblocage des roues, etc...

Suivant une technique connue, pour éviter une telle panne, on pratique l'expédient qui consiste à enduire le bobinage électrique d'un vernis aux silicones constituant une couche élastique intermédiaire propre à absorber les contraintes dues aux dilatations différentielles, sans dommage pour le fil métallique lui-même. Cette solution présente néanmoins l'inconvénient d'être coûteuse du fait qu'elle ajoute une étape dans l'assemblage du capteur et du fait que cette couche intermédiaire peut présenter des lacunes par lesquelles la résine peut tout de même pénétrer jusqu'au bobinage.

La présente invention a donc pour but de réaliser un capteur, du type décrit plus haut, qui ne présente pas ces inconvénients et dans lequel le fil du bobinage est cependant protégé de toute rupture due à des dilatations différentielles, ce qui améliore la fiabilité du capteur.

On atteint ce but de l'invention avec un capteur électromagnétique à reluctance variable, du type qui comprend une carcasse creusée d'un logement contenant au moins un élément de l'ensemble constitué par un aimant permanent et une pièce polaire, un bobinage électrique enroulé sur la carcasse autour de cette cavité pour fournir entre ses bornes un signal électrique de sortie du capteur, un capuchon enveloppant au moins une partie de la carcasse pour couvrir au moins le bobinage électrique, et une résine de protection et d'isolation électrique injectée entre le capuchon et la carcasse, capteur caractérisé en ce que la carcasse comporte des parois d'arrêt qui s'étendent de manière jointive jusqu'au capuchon, ces parois étant agencées pour s'opposer à un écoulement de la résine sur le bobinage électrique, lors de l'injection de cette résine.

Au dessin annexé, donné seulement à titre d'exemple :

- la Fig. 1 est une vue en coupe d'un premier mode de réalisation du capteur suivant l'invention ;
- la Fig. 2 est une vue partielle, en coupe, d'un deuxième mode de réalisation du capteur suivant l'invention ; et
- la Fig. 3 est une vue partielle, en coupe, d'un troisième mode de réalisation de l'invention.

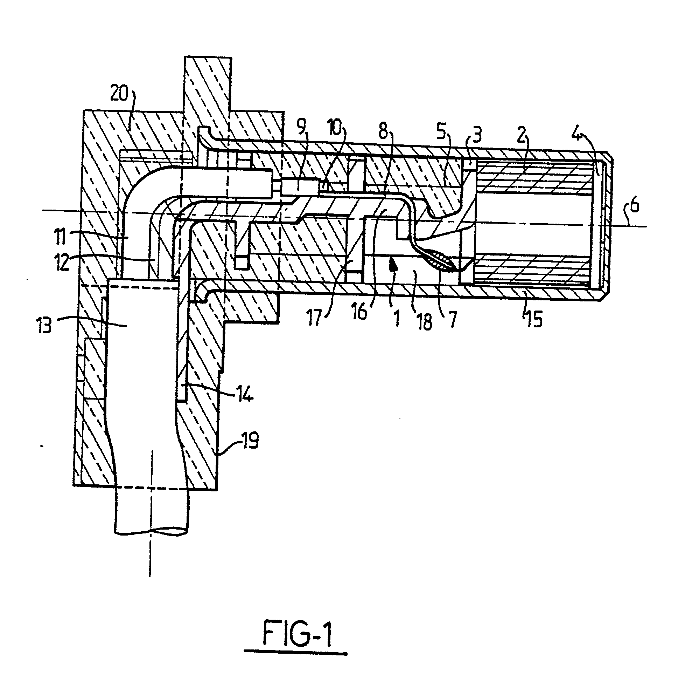

On se réfère à la Fig. 1 où le capteur représenté comprend essentiellement une carcasse 1 qui porte un bobinage électrique 2 entre deux joues 3 et 4, une pièce polaire et un aimant permanent (non représentés) étant glissés bout-à-bout dans un logement cylindrique 5 de la carcasse, d'axe 6.

Chaque extrémité du fil du bobinage 2 est raccordée par une soudure 7 à une cosse de raccordement 8 dont l'autre extrémité 9 est sertie sur le fil 10 d'un des deux conducteurs 11, 12 d'un câble électrique 13 qui transmet les signaux électriques formés par le capteur à un dispositif d'exploitation tel qu'un gouverneur électronique de boîte de vitesses automatique ou un dispositif d'antiblocage de roues, par exemple.

La carcasse 1 présente une patte 14 transversale à l'axe 8 pour servir d'appui et de fixation au câble 13.

Pour assembler le capteur comprenant les pièces décrites ci-dessus, on insère dans le logement 5 de la carcasse l'aimant permanent et la pièce polaire, on forme le bobinage électrique 2 sur la carcasse 1 et on raccorde le câble 13 à ce bobinage par les cosses 10. On glisse ensuite sur la partie de la carcasse d'axe 8 un capuchon 15 de protection mécanique dont le fond couvre une ouverture du logement 5 par laquelle on a inséré l'aimant et la pièce polaire dans ce logement. L'ensemble est placé alors dans un moule qui définit, avec le capuchon 15, le volume extérieur du capteur, en particulier le volume d'un pied 19 qui sert à la protection du câble et à la fixation du capteur en position de fonctionnement par rapport à un disque portant des dents à sa périphérie, comme on l'a indiqué plus haut.

Le pied 19 est alors formé par injection dans le moule d'un résine 20 d'isolement électrique et de protection mécanique, résine qui vient noyer aussi certains organes du capteur contenus dans le capuchon 15.

Suivant la présente invention, pour éviter les inconvénients qui résultent d'une enrobage par la résine du bobinage électrique 2, la carcasse 1 est conformée de manière à s'ajuster étroitement sur le capuchon suivant des joints étanches qui s'opposent à une pénétration de la résine, au moment de l'injection, au-delà de la joue 3 sur laquelle s'appuie le bobinage électrique, joue qui constitue ainsi une paroi d'arrêt de la résine.

A cet effet, la joue 3 prend une forme généralement circulaire de diamètre pratiquement égal au diamètre interne du capuchon cylindrique 15. Pour s'opposer à l'écoulement de la résine, cette joue coopère avec autre une autre paroi d'arrêt 16 qui déborde latéralement de la carcasse, de part et d'autre du logement 5 dans un plan sensiblement axial. Cette paroi d'arrêt 16 s'étend jusqu'à la paroi interne du capuchon 15 de manière à s'ajuster étroitement sur celle-ci en constituant un joint étanche entre la paroi 16 et le capuchon 15, joint qui s'oppose au passage de la résine injectée. Sur la Fig. 1, cette paroi 16 est vue en coupe suivant un plan parallèle à l'axe 6 et passant par une cosse de raccordement 8, qui traverse la paroi 16. Une autre paroi d'arrêt radiale 17 déborde de la carcasse et présente un contour semi-circulaire en dessous de la paroi 16 (du point de vue de la Figure 1), de diamètre pratiquement égal à celui de la paroi interne du capuchon 15 pour constituer un joint étanche à la résine au contact de cette paroi 17 et du capuchon 15. Ainsi, la soudure 7 qui raccorde le fil du bobinage à la cosse 8 est placée dans une cavité 18 complètement isolée de la résine d'injection par la coopération des parois d'arrêt 3, 16 et 17 avec le capuchon 15, alors que l'autre extrémité 9 de la cosse 8 est complètement enrobée par la résine. On protège ainsi entièrement le fil du bobinage de tout contact avec la résine, lors de l'injection de celle-ci dans le moule de surmoulage. Quand la joue 3 est percée d'une fente qui permet le passage du fil du bobinage dans la cavité 18 pour son raccordement à la cosse 8 par la soudure 7, l'isolement de la cavité 18 est en outre nécessaire pour éviter toute infiltration, à travers cette fente, de la résine vers le bobinage.

Ainsi, grâce à l'invention, un échauffement du capteur par l'environnement dans lequel il est placé, un véhicule automobile par exemple, ne crée aucune contrainte mécanique sur le bobinage électrique, due aux dilatations différentielles mentionnées plus haut. On supprime ainsi une cause de rupture du fil du bobinage et on accroît correlativement la fiabilité du capteur.

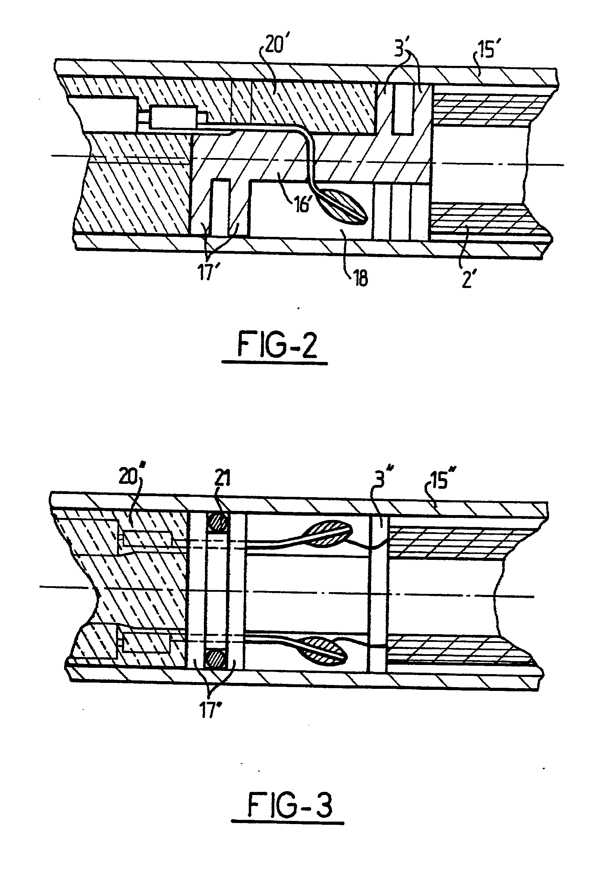

On a représenté aux figs. 2 et 3 des variantes du capteur de la Fig. 1, visant à améliorer encore l'étanchéité des joints qui s'opposent au passage de la résine vers le bobinage électrique.

A ces figures les références numériques affectées d'un "prime" ou d'un "seconde" désignent des organes ou parties d'organes semblables à ceux repérés sur la Fig. 1 par le même nombre.

A la Fig. 2, la joue 3' et la paroi 17' ont été dédoublées pour renforcer l'isolement de la cavité 18' et du bobinage 2' vis-à-vis de la résine 20' arrêtée par cette joue et cette paroi.

A la Fig. 3, un joint torique 21 installé entre deux parois 17" renforce encore la protection contre toute infiltration de résine entre ces parois et le capuchon 15".

La carcasse du capteur suivant l'invention peut être réalisée par moulage d'une matière plastique telle qu'un polyamide, un polyester ou un polysulfure de phénylène (PPS). L'acier inoxydable, l'aluminium ou une matière thermoplastique convient à la réalisation du capuchon. De nombreuses résines thermoplastiques ou thermodurcissables bien connues de l'homme de métier peuvent être utilisées pour constituer l'enrobage de résine 20, 20', 20" du capteur suivant l'invention.

**Revendications**

1. Capteur électromagnétique à reluctance variable, du type qui comprend une carcasse creusée d'un logement contenant au moins un élément de l'ensemble constitué par un aimant permanent et une pièce polaire, un bobinage électrique enroulé sur la carcasse autour de cette cavité pour fournir entre ses bornes un signal électrique de sortie du capteur, un capuchon enveloppant au moins une partie de la carcasse pour couvrir au moins le bobinage électrique, et une résine de protection et d'isolation électrique injectée entre le capuchon et la carcasse, capteur caractérisé en ce que la carcasse comporte des parois d'arrêt qui s'étendent de manière jointive jusqu'au capuchon, ces parois étant agencées pour s'opposer à un écoulement de la résine sur le bobinage électrique, lors de l'injection de cette résine.

2. Capteur conforme à la revendication 1, dans lequel les extrémités du fil du bobinage sont connectées chacune à un conducteur électrique de sortie du capteur par des cosses de raccordement, caractérisé en ce que lesdites parois d'arrêt de la carcasse s'ajustent contre le capuchon pour isoler de la résine l'extrémité de chaque cosse qui est raccordée au fil du bobinage.

3. Capteur conforme à la revendication 2, caractérisé en ce que chaque cosse de raccordement traverse une paroi d'arrêt (16) de la carcasse, l'extrémité de la cosse qui est raccordée au câble de sortie étant noyée dans la résine.

4. Capteur conforme à l'une quelconque des revendications 1 à 3, caractérisé en ce que la carcasse comprend des parois d'arrêt radiales (3,17) et des parois d'arrêt généralement axiales (16) entre ces parois d'arrêt radiales.

5. Capteur conforme à l'une quelconque des revendications précédentes, caractérisé en ce qu'au moins une des parois d'arrêt est dédoublée pour renforcer l'étanchéité de sa jointure avec le capuchon.

6. Capteur conforme à l'une quelconque des revendications 1 à 5, caractérisé en ce qu'un joint torique renforce l'étanchéité de la jointure entre au moins une des parois d'arrêt et le capuchon.

## Patentansprüche

1. Elektromagnetischer Meßaufnehmer veränderlichen magnetischen Widerstandes mit einem Gehäusekörper, der mit einer Aufnahme versehen ist, die mindestens ein Element einer von einem Permanentmagneten und einem Polstück gebildeten Anordnung enthält, einer elektrischen Spule, die auf dem Gehäusekörper um diese Aufnahme gewickelt ist, um zwischen ihren Klemmen ein elektrisches Ausgangssignale des Meßaufnehmers abzugeben, einer Kappe, die mindestens einen Abschnitt des Gehäusekörpers umgibt, um mindestens die elektrische Spule zu bedecken, und einem zum Schutz und zur elektrischen Isolierung dienenden Kunstharz, das zwischen die Kappe und den Gehäusekörper eingespritzt ist, dadurch gekennzeichnet, daß der Gehäusekörper Dämmwände aufweist, die sich in Anlage mit der Kappe erstrecken, wobei diese Wände so ausgebildet sind, daß sie beim Einspritzen des Kunstharzes verhindern, daß das Kunstharz auf die elektrische Spule fließt.

2. Meßaufnehmer nach Anspruch 1, bei dem die Enden des Spulendrahtes jeweils über Kabelschuhe mit einem elektrischen Ausgangsleiter des Meßaufnehmers verbunden sind, dadurch gekennzeichnet, daß die Dämmwände des Gehäusekörpers in der Kappe eingepaßt sind, um das am Spulendraht angeschlossene Ende jedes Kabelschuhs gegen das Kunstharz abzuschirmen.

3. Meßaufnehmer nach Anspruch 2, dadurch gekennzeichnet, daß jeder Kabelschuh sich durch eine Dämmwand 16 des Gehäusekörpers erstreckt, wobei das am Kabelausgang angeschlossene Ende des Kabelschuhs in dem Kunstharz eingebettet ist.

4. Meßaufnehmer nach einem der Ansprüche, 1 bis 3, dadurch gekennzeichnet, daß der Gehäusekörper radiale Dämmwände (3, 17) und im wesentlichen axiale Dämmwände (16) zwischen diesen radialen Dämmwänden aufweißt.

5. Meßaufnehmer nach einem der vorhergehenden Ansprüche, dadurch gekennzeichnet, daß mindestens eine der Dämmwände zweigeteilt ist, um die Abdichtung seiner Anlage an der Kappe zu verstärken.

6. Meßaufnehmer nach einem der Ansprüche 1 bis 5, dadurch gekennzeichnet, daß ein Dichtring die Abdichtung der Anlage zwischen mindestens einer Dämmwand und der Kappe verstärkt.

## Claims

1. Variable reluctance electromagnetic sensor, of the type which comprises a carcass hollowed from a housing containing at least one element of the assembly constituted by a permanent magnet and a pole piece, an electrical winding wound on the carcass around this cavity in order to provide between its terminals an electrical output signal of the sensor, a cover enclosing at least part of the carcass in order to cover at least the electrical winding, and a protective and electrically insulating resin injected between the cover and the carcass, this sensor being characterized in that the carcass includes stop walls which contiguously extend to the cover, these walls being arranged to oppose a flow of the resin onto the electrical winding, during the injection of this resin.

2. Sensor according to Claim 1, wherein the ends of the wire of the winding are each connected to an electrical output conductor of the sensor by connecting tags, characterized in that the said stop walls of the carcass fit against the cover in order to insulate the end of each tag which is connected to the wire of the winding from the resin.

3. Sensor according to Claim 2, characterized in that each connecting tag passes through a stop wall (16) of the carcass, the end of the tag which is connected to the output cable being submerged in the resin.

4. Sensor according to any of Claims 1 to 3, characterized in that the carcass comprises radial stop walls (3, 17) and generally axial stop walls (16) between these radial stop walls.

5. Sensor according to any of the preceding claims, characterized in that at least one of the stop walls is doubled in order to strengthen the sealing of its join with the cover.

6. Sensor according to any of Claims 1 to 5, characteized in that a ring seal strengthens the sealing of the join between at least one of the stop walls and the cover.

FIG-1

FIG-2

FIG-3